**Europäisches Patentamt**

**European Patent Office**

**Office européen des brevets**

(19)

(11) Publication number: **0 082 547**

**A1**

(12) # EUROPEAN PATENT APPLICATION

(21) Application number: **82201546.7**

(22) Date of filing: **04.12.82**

(51) Int. Cl.³: **B 60 G 5/06**

(30) Priority: **23.12.81 IT 6867281**

(43) Date of publication of application:
**29.06.83 Bulletin 83/26**

(84) Designated Contracting States:
**AT BE CH DE FR GB LI LU NL SE**

(71) Applicant: **Perlini, Roberto**
**Corso Venezia, 93**
**I-37047 S. Bonifacio (Verona)(IT)**

(72) Inventor: **Perlini, Roberto**
**Corso Venezia, 93**
**I-37047 S. Bonifacio (Verona)(IT)**

(74) Representative: **Robba, Eugenio**
**Studio "INTERPATENT" via Caboto 35**
**I-10129 Turin(IT)**

(54) **Suspension system for coupled axles of industrial vehicles.**

(57) Suspension system for coupled axles of industrial vehicles, comprising, for each side of the vehicle, two rigid arms (8, 10) rotatably coupled to a central pivot (12) on the frame (9) of the vehicle and connected at their ends to the axles (2, 4); and an elastic means (22) secured to elements (28, 28') in the form of brackets which project from and are integrally formed with said arms and have the function of springing and dampening the vibrations. For each side of the vehicle one arm (10) has a geometrical configuration adapted to react to lateral thrust and the other (8) has the form of a rod articulated at its ends with ball joints (30, 32, 36) to afford a good degree of freedom in the coupling and impart to the system the capability of articulation and follow the unevennesses of the ground.

**FIG. 1**

-1-

Suspension system for coupled axles of industrial vehicles

The present invention relates to a suspension system for coupled axles of industrial vehicles.

The known suspension systems for coupled axles of industrial vehicles accomplish the connection of the axles to the frame of the vehicle by an elastic means.

In one of the systems, currently named "cantilever" system, which at present is most widespread, on each side of the vehicle a semielliptic leaf spring is coupled at its ends to the axles and is rigidly set in a bracket at the centre of the frame of the vehicle. In said system the leaf spring therefore performs the double function of a springing member and mechanical connection member and has to support, in addition to the vertical load, also the transverse thrust and the twisting stress as is known in the art.

To be able to support all of the aforementioned thrusts and stresses, in practice the leaf spring had to be overdimensioned with great detriment to its elastic properties which have been sacrificed to sturdiness and thus rigidity.

One of the most evident disadvantages of the known suspension systems for coupled axles of industrial vehicles really is that they afford little driving comfort because the unevennesses of the ground are not adequately absorbed due to the use of a too rigid elastic means.

Thus, such unevennesses produce vibrations and stresses which are deleterious to the entire structure of the vehicle.

Attempts have been made to partially solve this problem. They are mainly directed to the recovery of an elastic means with improved properties and consist in the introduction of upper tie rods placed in the form of a triangle between the axles and the centre of the frame to solve at least the problem of absorption of the transverse thrust, thus in- tending to relieve the leaf spring at least from this burden. However, the obtained result is not satisfactory as such solutions are still based on a compromise which permits the leaf spring to be simultaneously the mechanical connection member of the axles to the frame of the vehicle and the elastic springing means.

The present invention now proposes to provide a suspension system for coupled axles of industrial vehicles, which eliminates or reduces the inconveniences of the known systems by permitting to use an elastic means which is not the result of a compulsory choice and can therefore be completely efficient and adequate for any desired use and for any environmental condition in which the vehicle my find itself. In this manner it will be possible to ensure high comfort to the driver and guarantee the absorption of vibrations produced by unevennesses of the ground.

The above and other objects and advantages of the invention, which will become evident from the following description, are achieved by a suspension system for coupled axles of industrial vehicles, characterized by the fact that it comprises, for each side of the vehicle, two rigid arms rotatably coupled at one end to a central pivot of the frame of the vehicle and connected at the opposite end

0082547

to each of said axles, each of said rigid arms carrying and being formed integrally with a projecting element in the form of a bracket for connection to an elastic means which will thus be interposed between said elements projecting from said arms in a manner deformable by the oscillation of the arms about said pivot of the frame of the vehicle.

Further, for each side of the vehicle, one of said arms is substantially fork-shaped at the end coupled to the central pivot of the frame of the vehicle and the other of said arms is substantially rod-shaped, the fork-shaped element providing the connection, on each side of the vehicle, respectively to each of said axles.

The suspension system for coupled axles of industrial vehicles according to the present invention thus ensures the mechanical connection of the axles to the frame by rigid mechanical members and not by elastic members.

In the suspension system according to the present invention the elastic means serve no other purpose than that of undergoing elastic deformation to absorb the unevennesses of the ground and permit the suspension to be placed in conformity with the configuration of the ground. The elastic means may be chosen among the various existing types such as pneumatic cylinders, oleodynamic cylinders or springs, according to convenience or opportuneness.

A preferred embodiment of the invention will now be described by way of a non-restrictive example with reference to the accompanying drawings, in which:

- Fig. 1 provides a schematic side elevational view of a preferred embodiment of the invention illustrated on flat ground, wherein the position of the suspension when the vehicle is empty is shown by dash-and-dot lines and the position of the suspension when the vehicle is loaded is shown by full lines;

- Fig. 2 provides a schematic side elevational view of the same embodiment as in Fig. 1, with the vehicle loaded, wherein the position of the suspension on flat ground is shown by full lines and the position of the suspension on uneven ground is shown by dash lines;

- Fig. 3 provides a schematic top plan view, partly in section, of the suspension system for coupled axles according to the invention;

- Fig. 4 provides a schematic rear elevational view of the embodiment of the invention shown in Figs. 1 and 2, wherein the position of the suspension on flat ground is shown by dash lines and the position of the suspension on uneven ground is shown by full lines;

- Fig. 5 provides a schematic side elevational view of another embodiment of the invention, wherein the elastic means is constituted by a leaf spring;

- Fig. 6 provides a schematic side elevational view of a further embodiment of the invention, wherein the elastic means consists of a coil spring.

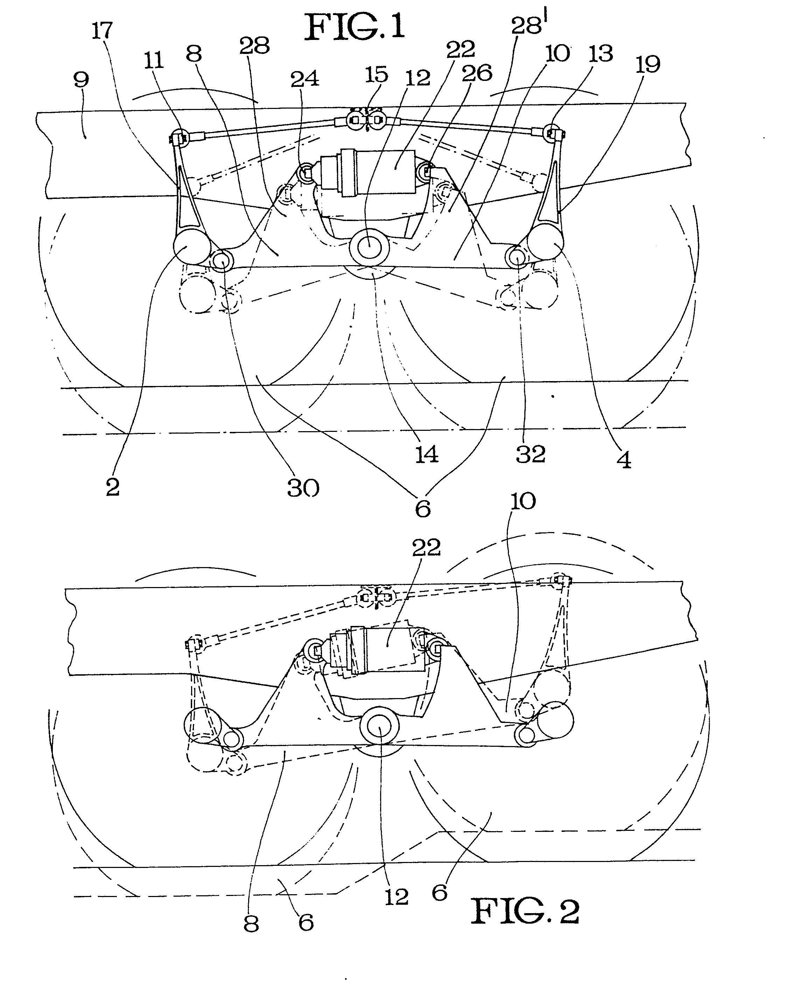

With reference to Fig. 1, two rigid arms 8 and 10 are rotatably coupled at the inner ends to a central pivot 12 located in a bracket 14 formed integrally with the frame 9 of the vehicle.

The outer ends of the arms 8 and 10 are connected to the axles 2 and 4 of the vehicle through pivots 30 and 32 with ball joints.

The rigid arms 8 and 10 are formed integrally with projecting elements 28 and 28' in the form of brackets to the ends of which the ends of a pneumatic cylinder 22 are connected at 24 and 26, the pneumatic cylinder constituting the elastic means of the suspension.

Thus the load of the vehicle rests on the central pivot 12 from which it is transmitted through the arms 8 and 10 to the axles 2 and 4 and therefrom to the wheels 6 of the vehicle.

The distribution of the load to the axles under consideration is predetermined by the characteristics of design of the arms 8 and 10 and then remains constant for any position that the system assumes around the pivot 12.

The dash-and-dot line representation of Fig. 1 illustrates the position of the suspension when the vehicle is empty. There is a certain angle between the arms and the frame of the vehicle is located at a certain height from the ground; the pneumatic cylinder which constitutes the elastic means is in a relatively extended condition.

The full line representation of Fig. 1, on the other hand, illustrates the position of the same suspension under load: the pivot 12 must be considered as being lowered relative to the ground, the arms 8 and 10 are more stretched so that the points 24 and 26 of the projecting elements in the form of brackets 28 and 28' have approached each other. In this situation the elastic means has contracted dampening the stretching effect of the load on the arms.

The suspension system under consideration further comprises elements in the form of connecting rods 17 and 19 coupled at one end to the axles and at the other to upper tie rods with articulated joints 11 and 13, which in turn are connected at 15 by an articulated joint to the frame of the vehicle, as is known in the art, to react mainly to the braking torque.

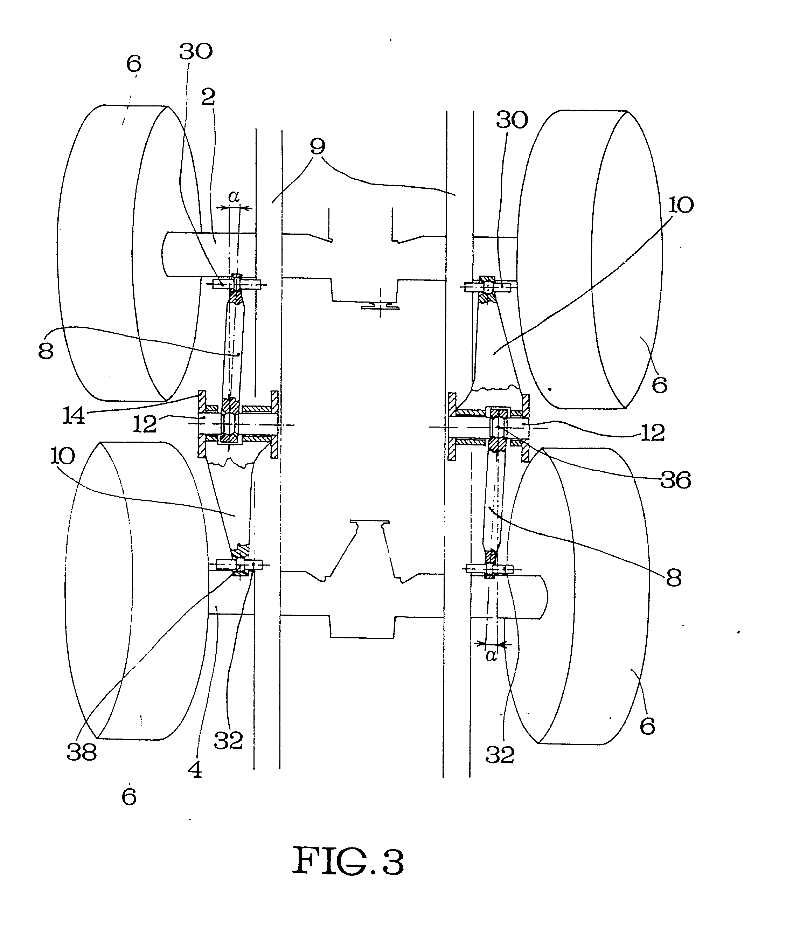

With reference to Fig. 2 there is shown by dash lines the position of the suspension when the ground has holes or elevations in the vicinity of the wheels 6 of the vehicle. Due to the unevenness of the ground, the arms 8 and 10 undergo variations in their angular position about the central pivot 12, which immediately cause deformations of the elastic means 22 and are therefore absorbed thereby: seen as a whole, there is a rotation of the pair of arms 8 and 10 about the central pivot 12 while the distribution of the loads on the axles remains unchanged.

Fig. 3 illustrates the system in a plan view with the suspension partly in section and shows further substantial characteristics thereof. For clarity of the drawing, the elastic means is not shown nor are the projections of the arms supporting it.

On each side of the vehicle, one of the two arms, in the drawing the arm 10, widens towards its inner end rotatably coupled to the pivot 12, forming a fork type configuration.

Further, on each side of the vehicle, the arm 10 is coupled at its outer end alternatively to the axle 2 and the axle 4. This configuration gives the system the capability of reacting to the lateral thrust produced by centrifugal force when negotiating a curve, or by the component of the force of gravity on travelling on transversely inclined ground, or by the action of the wind or any other force acting in the transverse direction.

Through the members in the form of connecting rods, not shown in Fig. 3, the pivots 30 connect the rigid arms 8 and 10 to the axle 2 and the pivots 32 analogously connect them to the axle 4. As mentioned before, the rigid arms are coupled to each other and to the frame 9 of the vehicle at the pivot 12: all these couplings are made by the adoption of ball joints as 36 and 38 adapted to pivotally rotate in the respective seats of articulation.

Thus, the overall system is endowed with a determined degree of freedom of articulation to ensure good adhesion of the wheels to rough or uneven ground having holes and elevations. For this purpose the arm 8 has been given the form of a rod with ball joints at both ends to give it a wide degree of articulation between the pivot 12 and the axle.

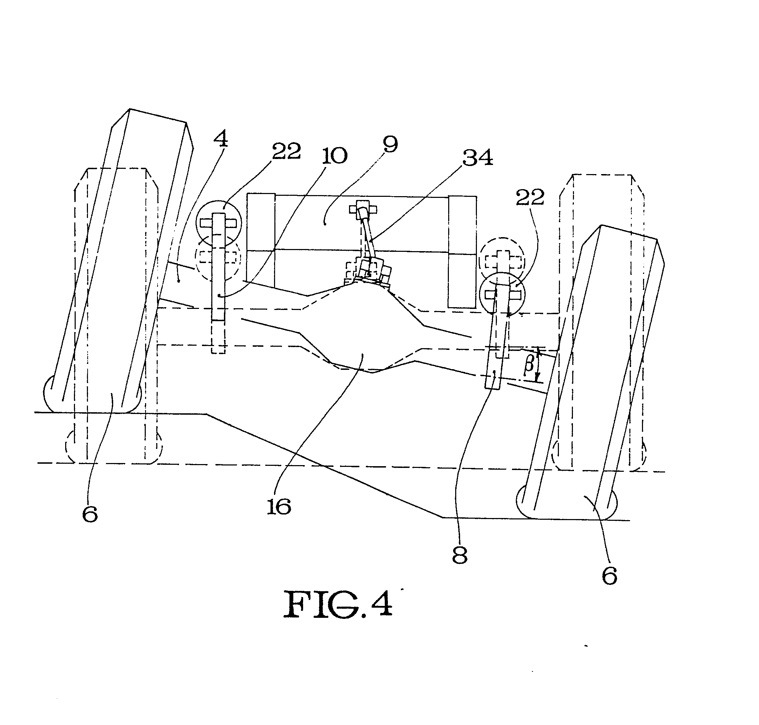

The rotation which the arm 8 can describe has therefore a projection on a horizontal plane represented by the angle $\alpha$ of Fig. 3 and a projection on a vertical transverse plane represented by the angle $\beta$ of Fig. 4.

Thus, each axle is connected to the frame by the arm 10, which reacts to transverse thrust and has freedom of movement only in the vertical direction, and by the arm 8 which maintains the connection of the axle to the frame for any position that the axle may take by moving about its point of connection with the arm 10.

In fact, Fig. 4 provides a representation in rear elevation of the position that the suspension system takes in the presence and absence of differences of height between the two wheels 6 of one and the same axle 4.

Whereas the arm 10 is characterized by rigidity in the transverse direction due to its fork-shaped inner end coupled to the pivot 12 and therefore can move only vertically, the arm 8 can also translate by describing the angle $\beta$. In rear view the arm thus appears oblique as upwardly it is connected to the cylinder 22 at its projecting bracket portion.

Fig. 4 also shows the box 16 of the axle which is movably connected to the frame 9 of the vehicle by the torque tie rod 34, as is known in the art.

From the above description it will thus be evident that

-8-

0082547

in the suspension system for coupled axles of industrial vehicles according to the present invention the functions of connection of the axles to the frame of the vehicle are performed by mechanical members and not by elastic means. Therefore, in the system according to the invention the elastic means may be selected in an optimal manner among those having the characteristics most suitable for the application for which the vehicle is designed.

Although in the preferred embodiment described above a pneumatic cylinder has been chosen as elastic means, it is to be understood that said choice is not limiting.

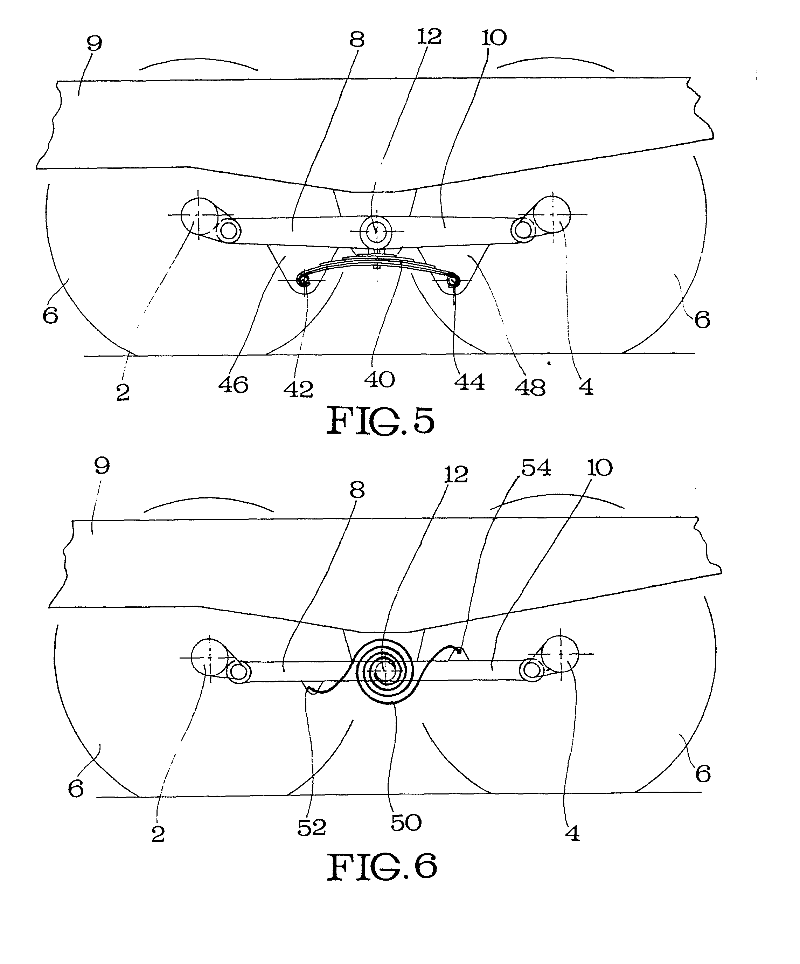

Fig. 5 illustrates another embodiment of the invention in which the elastic means consists of a leaf spring 40 connected to two projections in the form of brackets 46 and 48 extending downwardly and formed integrally with the rigid arms 8 and 10. The eyelets of the leaf spring are connected to the brackets 46 and 48 at 42 and 44. The frame 9 is again connected at its central pin 12 to the axles 2 and 4 through the rigid arms 8 and 10.

Fig. 6 refers to a further embodiment of the present invention where the elastic means consists of a coil spring 50 the ends of which are connected to two brackets 52 and 54 formed integrally with the rigid arms 8 and 10 and extending one downwardly and the other upwardly.

The connection of the axles 2 and 4 to the frame 9 of the vehicle is again obtained through the rigid arms 8 and 10 which are rotatably coupled to the central pin 12 of the frame.

Due to its sturdiness and optimal springing capacity, the suspension system for coupled axles according to the present invention is particularly suitable for industrial vehicles designed to run on very uneven ground as is found

0082547

in quarries or building yards.

These characteristics being given, it follows that it is excellent on less uneven ground and on roads.

It is apparent that the invention is not limited to the described and illustrated embodiments and that it is susceptible of modifications and variations within the scope of the same inventive idea.

CLAIMS

1. Suspension system for coupled axles of industrial vehicles, characterized by the fact that it comprises, for each side of the vehicle, two rigid arms rotatably coupled at one end to a central pivot of the frame of the vehicle and connected at the opposite end to each of said axles, each of said rigid arms carrying and being formed integrally with a projecting element in the form of a bracket for connection to an elastic means which is thus interposed between said elements projecting from said arms, in a manner deformable by the oscillation of the arms about said pivot of the frame of the vehicle.

2. Suspension system for coupled axles according to the preceding claim, characterized by the fact that, for each side of the vehicle, one of said arms is substantially fork-shaped at the inner end coupled to the central pivot of the frame of the vehicle and the other of said arms substantially has the form of a rod, the fork-shaped element providing the connection, for each side of the vehicle, respectively with each of said axles.

3. Suspension system for coupled axles according to the preceding claims, characterized by the fact that the connection of said arms to said axles is effected by members in the form of connecting rods coupled to the arms by ball joint pivots.

4. Suspension system for coupled axles according to the preceding claims, characterized by the fact that said rigid arm having a substantially rod-shaped configuration is coupled to the central pivot of the frame of the vehicle by a ball joint.

5.   Suspension system for coupled axles according to the preceding claims, characterized by the fact that it comprises, for each axle, torque tie rods connected by articulated joints to the frame of the vehicle.

6.   Suspension system for coupled axles according to claim 1, characterized by the fact that said elastic means is selected among pneumatic cylinders, oleodynamic cylinders, springs or appropriate combinations thereof.

FIG.1

FIG.2

0082547

FIG.3

FIG.4

FIG.5

FIG.6

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 025 793 (TSCHAPATT) *The whole document* | 1,2,6 | B 60 G 5/06 |
| X | US-A-2 795 434 (GOUIRAND) *The whole document* | 1,2,6 | |
| X | US-A-2 172 173 (PETERMAN) *The whole document* | 1,2,6 | |
| X | DE-C- 731 883 (RHEINMETALL-BORSIG) *Page 2, lines 45-61; figures 1-6* | 1,6 | |
| A | US-A-3 687 477 (MILLER) *Column 3, line 43 to column 4, line 27; figures 1-5* | 1-6 | |
| | | | TECHNICAL FIELDS SEARCHED (Int. Cl. ³) |
| A | US-A-4 034 996 (MANITA) *Column 2, lines 9-21; figures 1,2* | 3,4 | B 60 G |
| A | US-A-3 752 498 (SHEA) *Column 4, lines 50-57; figures 1,2* | 1,6 | |
| A | US-A-3 922 024 (BURKARDT) *Column 3, lines 57-67; figures 1,3* | 6 | |

The present search report has been drawn up for all claims

| Place of search | Date of completion of the search | Examiner |
|---|---|---|
| THE HAGUE | 23-03-1983 | KIESLINGER J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82